# EUROPÄISCHE PATENTANMELDUNG

(11) **EP 4 329 242 A1**
(43) Veröffentlichungstag der Anmeldung: **28.02.2024**
(21) Anmeldenummer: 22192154.7
(22) Anmeldetag: 25.08.2022
(51) Int. Cl.: H04L 9/40, G06N 3/02, H04L 12/18, H04L 51/04

(54) **VERFAHREN UND SYSTEMANORDNUNG ZUM PROAKTIVEN EINSTELLEN EINER SICHERHEITSKONFIGURATION**

(71) Anmelder: DGC Switzerland AG, 8002 Zürich (CH)
(72) Erfinder: Nehls, Matthias, 8002 Zürich (CH)
(74) Vertreter: Reich, Jochen

(57) **Zusammenfassung**

Die vorliegende Erfindung ist auf ein Verfahren zum proaktiven Einstellen einer Sicherheitskonfiguration bei Systemkomponenten typischerweise eines Rechnersystems gerichtet. Die vorliegende Erfindung erlaubt es, unberechtigte Systemzugriffe frühzeitig zu erkennen und sodann zu verhindern. So ist es ein Vorteil der Erfindung, dass nicht erst ein unberechtigtes Eindringen in ein Computersystem im Nachhinein erkannt wird, sondern vielmehr wird dies proaktiv bereits vor dem Angriff verhindert. Somit ist es erfindungsgemäß unmöglich unberechtigterweise Daten auszulesen beziehungsweise Schadbefehle in ein Computersystem einzubringen. Die Erfindung ist ferner gerichtet auf eine entsprechend eingerichtete Systemanordnung sowie auf Steuerbefehle, welche das Verfahren implementieren sowie auf ein computerlesbares Medium aufweisend die Steuerbefehle.

## Beschreibung

Die vorliegende Erfindung ist auf ein Verfahren zum proaktiven Einstellen einer Sicherheitskonfiguration bei Systemkomponenten typischerweise eines Rechnersystems gerichtet. Die vorliegende Erfindung erlaubt es, unberechtigte Systemzugriffe frühzeitig zu erkennen und sodann zu verhindern. So ist es ein Vorteil der Erfindung, dass nicht erst ein unberechtigtes Eindringen in ein Computersystem im Nachhinein erkannt wird, sondern vielmehr wird dies proaktiv bereits vor dem Angriff verhindert. Somit ist es erfindungsgemäß unmöglich unberechtigterweise Daten auszulesen beziehungsweise Schadbefehle in ein Computersystem einzubringen. Die Erfindung ist ferner gerichtet auf eine entsprechend eingerichtete Systemanordnung sowie auf Steuerbefehle, welche das Verfahren implementieren sowie auf ein computerlesbares Medium aufweisend die Steuerbefehle.

Aus dem Stand der Technik sind unterschiedliche Angriffe auf Computersysteme bekannt. Hierbei versuchen unberechtigte Zugriff auf ein Computersystem derart zu erlangen, dass diese entweder unberechtigt Daten auslesen oder aber auch unberechtigte Daten in das Computersystem einschreiben. Darüber hinaus gibt es Angriffe, welche Systemparameter stören wie zum Beispiel die Antwortzeiten. So ist es aus dem Stand der Technik bekannt, einen sogenannten Denial of Service DOS-Angriff zu starten. Hierbei starten unterschiedliche Akteure diverse Anfragen deren Anzahl derart hoch ist, dass das angegriffene Computersystem die Anfragen nicht mehr bewältigen kann. Hierunter leiden auch gutwillige Benutzer, die ebenso nicht mehr bedient werden können.

Damit ein solcher Angriff Erfolg hat ist es notwendig, dass sich die Angreifer absprechen. Hierbei wird erreicht, dass alle Angreifer möglichst zum gleichen Zeitpunkt und für die gleiche Dauer zugreifen. Auf diese Art wird verhindert, dass das Zielsystem die Anfragen dennoch bewältigen kann. Durch den zeitlich gehäuften Angriff werden die Systemressourcen je Benutzer derart ausgelastet, dass mit sehr langen Antwortzeiten zu rechnen ist. Hierbei wird versucht die Antwortzeiten derart massiv zu verlängern, dass in der subjektiven Wahrnehmung eines gutwilligen Benutzers keine Dienste mehr angeboten werden können. Das Zielsystem ist sodann nicht mehr in der Lage die Anfrage zu bewältigen, da die Systemressourcen für derartige Anfragen nicht zur Verfügung stehen.

Ein Nachteil aus dem Stand der Technik ist es, dass herkömmliche Computersysteme erst dann reagieren, wenn der Angriff bereits stattgefunden hat. Erkennt das angegriffene System einen Angriff, so ist typischerweise der unerwünschte Effekt bereits eingetroffen und es kann lediglich im Nachhinein reagiert werden. Auch gutwillige Benutzer haben dann typischerweise den Eingriff zu spüren bekommen und leiden unter der deutlich gesenkten Systemperformanz.

Aus dem Stand der Technik sind unterschiedliche Kommunikationsmedien bekannt. Typischerweise werden Angriffe in spezialisierten Foren in dem sogenannten Darknet diskutiert. Darüber hinaus gibt es unterschiedliche Nachrichtendienste, welche eine verschlüsselte Kommunikation erlauben. Die unterschiedlichen Kommunikationsmedien benötigen unterschiedliche Registrierungen der Benutzer und sind typischerweise abgeschirmt. Damit Angriffe kumuliert stattfinden können, werden über solche Kommunikationskanäle Nachrichten ausgetauscht, welche typischerweise ein Angriffsziel und den durchzuführenden Angriff beschreiben. Diese Kommunikation ist notwendig, um den Angriff zu koordinieren.

Ferner ist es aus dem Stand der Technik bekannt, dass bestimmten kritischen Systemparametern Aktionen zugeordnet werden, welche diese Systemparameter schützen. So ist es beispielsweise aus dem Stand der Technik bekannt, dass bei einem Fehlverhalten beziehungsweise einer Fehlfunktion des angegriffenen Systems dieses einfach abgeschaltet wird. Diese drastische Maßnahme hat zur Folge, dass überhaupt kein Benutzer mehr bedient wird und somit auch das Geschäftsmodell zum Erliegen kommt.

Generell besteht ein Bedarf an Verfahren, welche Systemkomponenten effektiv schützen und hierbei nicht erst darauf warten, dass ein Angriff stattfindet. Findet ein Angriff statt und wird lediglich im Nachhinein reagiert, so sind meistens die negativen Folgen bereits eingetreten.

Ferner besteht ein Bedarf ein Verfahren zu schaffen, welches es automatisiert ermöglicht potentielle Angriffe zu erkennen und bereits vor einem Angriff geeignete Maßnahmen zu ergreifen, um den Angriff zu verhindern beziehungsweise den Angriff abzuschwächen.

Es ist somit eine Aufgabe der vorliegenden Erfindung ein Verfahren bereitzustellen, welches es ermöglicht, dass proaktiv, also vor einem Angriff, Sicherheitsmaßnahmen zum Schutz eines Computersystems einleitet. Darüber hinaus ist es eine Aufgabe der vorgeschlagenen Erfindung eine entsprechend eingerichtete Systemanordnung bereitzustellen sowie Steuerbefehle, welche das Verfahren ausführen beziehungsweise die Systemanordnung betreiben. Darüber hinaus ist es eine Aufgabe ein computerlesbares Speichermedium bereitzustellen, welches die Steuerbefehle aufweist.

Die Aufgabe wird gelöst mit den Merkmalen des Patentanspruchs 1. Weitere vorteilhafte Ausgestaltungen sind in den Unteransprüchen angegeben.

Demgemäß wird ein computerimplementiertes Verfahren zum proaktiven Einstellen einer Sicherheitskonfiguration bei Systemkomponenten vorgeschlagen, aufweisend ein kontinuierliches Auslesen mindestens eines Kommunikationsverlaufs aus einem verteilten Computernetzwerk; ein Bereitstellen eines Systemprofils als textuelle Beschreibung von Systemkomponenten, Systemparametern und mindestens einer Adresse; ein Identifizieren von Elementen des bereitgestellten Systemprofils in dem Kommunikationsverlauf; und ein Anwenden eines Verteidigungsprofils auf diejenige Systemkomponente deren Adresse und mindestens ein weiteres Element des Systemprofils in dem Kommunikationsverlauf identifiziert werden.

Das proaktive Einstellen der Sicherheitskonfiguration erlaubt es, dass eine Sicherheitskonfiguration eingestellt wird, bevor überhaupt ein Angriff stattgefunden hat. Der Angriff wird erkannt und somit liegen Hinweise vor, welches Ziel angegriffen wird und welche Aktionen durchgeführt werden sollen. Somit lassen sich Vorsichtsmaßnahmen bereits proaktiv durchführen, sobald sich ein Eingriff überhaupt erst ankündigt.

Das vorgeschlagene Verfahren bezieht sich auf Systemkomponenten, welche typischerweise Komponenten eines Rechnersystems darstellen. So kann das vorgeschlagene Verfahren ein oder mehrere Systemkomponenten durch eine Sicherheitskonfiguration beziehungsweise ein Verteidigungsprofil schützen. Es werden diejenigen Systemkomponenten geschützt, welche in dem Verteidigungsprofil beschrieben werden. Bei Systemkomponenten kann es sich um Softwarekomponenten oder aber auch um Hardwarekomponenten beziehungsweise eine Mischung hieraus handeln.

In einem vorbereitenden Verfahrensschritt erfolgt ein kontinuierliches Auslesen mindestens eines Kommunikationsverlaufs aus einem verteilten Computernetzwerk. Dieses Auslesen erfolgt typischerweise über spezialisierte Schnittstellen, da jeder Kommunikationsverlauf in anderer technischer Weise bereitgestellt werden kann. So kann es sich bei einem Kommunikationskanal, welcher den Kommunikationsverlauf bereitstellt, um einen Nachrichtendienst oder um ein Forum handeln. Entsprechende Schnittstellen müssen derart eingerichtet sein, dass sie Zugriff auf den Kommunikationsverlauf erhalten. Hierzu können weitere Verfahrensschritte notwendig sein, wie beispielsweise das Registrieren einer entsprechenden Schnittstelle zum Auslesen. Das Auslesen muss derart kontinuierlich erfolgen, dass Änderungen in dem Kommunikationsverlauf erkannt werden. Kontinuierlich heißt hierbei nicht, dass zwingendermaßen zu jeder Zeit ausgelesen wird, sondern vielmehr erfolgt ein stetiges beziehungsweise iteratives Auslesen. So können einzelne Zeitpunkte definiert werden, zu denen der Kommunikationsverlauf ausgelesen wird. Ein kontinuierliches Auslesen kann also als ein stetiges, wiederholtes Auslesen beschrieben werden.

Das Auslesen erfolgt derart, dass mittels Schnittstellen ein oder mehrere Kommunikationskanäle ausgelesen werden. Insgesamt ist es vorteilhaft unterschiedliche Kommunikationsverläufe auszulesen und sodann diese in ihrer Gesamtheit auszuwerten. Sollen beispielsweise gehäuft Angriffe auf ein Zielsystem durchgeführt werden, so ist es möglich, dass der Angriff sowohl in einem Forum als auch in einem Nachrichtendienst diskutiert wird. Somit werden also diese Kommunikationsverläufe kumuliert ausgewertet und sodann wird ein Handlungsbedarf abgeleitet.

Bei dem verteilten Computernetzwerk handelt es sich typischerweise um das Internet, wobei auch einzelne abgetrennte Bereiche wie das sogenannte Darknet adressiert werden. Das Computernetzwerk umfasst unter anderem mobile Endgeräte, welche beispielsweise an einem Nachrichtendienst teilnehmen. Ein bekannter Nachrichtendienst ist Telegramm.

Bei dem Kommunikationsverlauf handelt es sich um eine zeitliche Abfolge von Nachrichten, welche von unterschiedlichen Nutzern abgesetzt werden. Der Kommunikationsverlauf ist typischerweise insofern nachvollziehbar, als dass ein Zeitpunkt einer Nachricht festgestellt werden kann und deren Inhalt. Oftmals können weitere Informationen abgeleitet werden, wie beispielsweise ein Benutzername und/ oder eine Zieladresse des Angriffs.

Um zu wissen welches Zielsystem geschützt wird, müssen zuerst entsprechende Systemprofile in dem System registriert werden. So erfolgt ein Bereitstellen eines Systemprofils als textuelle Beschreibung von Systemkomponenten, Systemparametern und mindestens einer Adresse. Ein Dienstanbieter, der das vorgeschlagene Verfahren durchführt, registriert also Systeme mit entsprechenden Komponenten, Systemparametern und einer Adresse. Beispielsweise wird ein bestimmtes Rechensystem beziehungsweise ein Server mit einer bestimmten IP-Adresse geschützt. Somit wird angegeben, dass es sich um einen Server handelt, der eine bestimmte Adresse aufweist. Die Systemparameter können angegeben werden oder automatisiert aus den Systemkomponenten abgeleitet werden. So ist bei einem Server implizit klar, dass dieser über eine Prozessoreinheit und unterschiedliche Speicher verfügt. So weist ein Server persistente und flüchtige Speicher auf.

Die textuelle Beschreibung benennt also Systemkomponenten und entsprechende Systemparameter, welche potenziell angegriffen werden. Darüber hinaus wird eine Adresse hinterlegt, die den Server beziehungsweise die Systemkomponente beschreibt. Bei einer Adresse muss es sich nicht um eine Internetprotokolladresse handeln, sondern es können alternativ beziehungsweise additiv auch einzelne Ports angegeben werden. Darüber hinaus ist es auch möglich das System als geographische Adresse derart zu beschreiben, dass angegeben wird, dass es sich bei dem Computersystem um Systemkomponenten einer Bank in einer bestimmten Straße handelt. Die Adresse gibt also irgendeinen Hinweis auf eine mögliche Zielkomponente, welche potenziell einem Angriff unterliegen kann. Anhand der Adresse, wie beispielsweise eine Straße mit Hausnummer, kann abgeleitet werden, welches System angegriffen werden soll.

Hierauf erfolgt nunmehr ein Identifizieren von Elementen des bereitgestellten Systemprofils in dem Kommunikationsverlauf. Wird beispielsweise erkannt, dass ein Angreifer eine Nachricht mit einer bestimmten Internetprotokolladresse in einen Kommunikationsverlauf einstellt, so kann abgeleitet werden, dass dieses System angegriffen werden soll. Die Elemente des bereitgestellten Systemprofils sind also die textuelle Beschreibung von Systemkomponenten, Systemparameter und mindestens eine Adresse. Werden diese Komponenten erkannt, so ist klar, welches Zielsystem angegriffen werden soll, sowie auf welche Art und Weise. Hierzu wird typischerweise die anzugreifende Systemkomponente genannt, Systemparameter und zudem ist die Adresse zum Durchführen des Angriffs notwendig.

Erfindungsgemäß können unterschiedliche Verfahren bereitgestellt werden, wie die Elemente erkannt werden. Hierbei erfolgt typischerweise eine Textverarbeitung beziehungsweise eine Sprachverarbeitung mit einer statistischen Auswertung. So können absolute beziehungsweise relative Schwellwerte angegeben werden, die einen Angriff identifizieren. Taucht beispielsweise in dem Kommunikationsverlauf besonders häufig eine bestimmte Internetprotokolladresse auf und wird hierbei beschrieben, dass besonders viele Systemabfragen erfolgen sollen, so wird darauf geschlossen, dass an dieser Zieladresse ein sogenannter Denial of Service Angriff stattfinden soll.

Hierzu erfolgt ein Identifizieren der Adresse und mindestens eines weiteren Elements des Systemprofils in dem Kommunikationsverlauf. Zum Durchführen der Angriffe ist die Adresse dringend notwendig, da sonst der Angriff nicht zielgerichtet ausgeführt werden kann. Darüber hinaus muss irgendein Hinweis auf den Angriff beziehungsweise die Art des Angriffs gegeben werden. Hierzu werden typischerweise Systemkomponenten und Systemparameter identifiziert. So ist es in einem Beispiel möglich, dass eine Internetprotokolladresse angegeben wird und sodann werden Systemparameter angegeben, die einen Lüfter des Zielsystems beschreiben. Wird nunmehr mittels des Angriffs gezielt der Lüfter ausgeschaltet und das System auf Volllast gesetzt, so kann das angegriffene System überhitzen und fällt aus. All dies kann in dem Kommunikationsverlauf mitgelesen werden und sodann kann mindestens eine Gegenmaßnahme ergriffen werden. Solche Gegenmaßnahmen sind in dem Verteidigungsprofil hinterlegt.

Bei dem Verteidigungsprofil handelt es sich um Parametereinstellungen, die Systemkomponenten zugewiesen sind beziehungsweise um Steuerbefehle, welche die Systemkomponenten schützen. So kann in dem Verteidigungsprofil definiert werden, dass der Wertebereich eines Systemparameters vorab begrenzt wird. Somit ist es Angreifern nicht mehr möglich, Systemparameter willkürlich zu beeinflussen. In dem Verteidigungsprofil kann zudem angegeben werden, dass pro Benutzer lediglich eine vorbestimmte maximale Bandbreite zur Verfügung steht. Auf diese Art und Weise wird verhindert, dass Benutzer unberechtigterweise übermäßig Bandbreite abgreifen, sodass für weitere Benutzer keine Bandbreite verfügbar wäre. Bei dem Verteidigungsprofil handelt es sich also um ein Zuweisen von Parameterwerten oder Aktionen an Systemkomponenten. Dies verhindert, dass sich eine ungewollte Funktionalität beziehungsweise ein ungewolltes Systemverhalten einstellt. Dies kann vorteilhafterweise vor dem Angriff durchgeführt werden.

Als eine Sicherheitslücke kann generell eine Beeinträchtigung in einem Zielsystem bzw. generell einem Rechnersystem verstanden werden. Hierzu muss nicht nur die Sicherheit an sich gefährdet sein, sondern vielmehr kann auch die Qualität eines Dienstes nachteilig beeinflusst werden. So kann eine Sicherheitslücke allgemein als eine Schwachstelle bezeichnet werden. Beispielsweise führt eine Denial of Service Attacke zu einer reduzierten Antwortzeit bzw. Bandbreite, was insofern sicherheitskritisch ist, als dass vorgegebene Qualitätsparameter nicht mehr erfüllt werden können. Auch eine Anfälligkeit für einen solchen Eingriff kann als Sicherheitslücke verstanden werden, da das angegriffene Zielsystem letztendlich nicht mehr in der Lage sein kann die geforderte Funktionalität aufgrund der Serverüberlastung bereitzustellen.

Gemäß einem Aspekt der vorliegenden Erfindung weist das Systemprofil mindestens eine physische Komponente, eine Produktbezeichnung, eine Komponentenart, eine Seriennummer, eine Versionsnummer, eine Konfiguration, einen alphanumerischen Wert, eine Internetadresse, eine Internetprotokolladresse, Steuerbefehle, eine Unternehmensbezeichnung, einen Standort und/ oder einen Hinweis auf eine Schnittstelle eines Systems auf. Dies hat den Vorteil, dass das Systemprofil umfangreich beschrieben werden kann und somit ist es möglich entsprechende Beschreibungen innerhalb des Kommunikationsverlaufs zu entdecken. So lassen sich die potenziell anzugreifenden Systemkomponenten umfangreich beschreiben und es lässt sich ein Angriff voraussagen. Wird beispielsweise besonders oft eine Seriennummer einer Systemkomponente einer Zieladresse genannt, so kann daraus abgeleitet werden, dass ein Angriff auf diese Komponente erfolgt. Darüber hinaus ist es möglich, dass in dem Kommunikationsverlauf diskutiert wird, welche Version einer bestimmten Software auf einer Zielkomponente installiert ist. Somit muss also ein Hinweis auf die Zielkomponente gegeben werden und eine entsprechende Versionsnummer mit einer bestimmten Häufigkeit diskutiert werden. Wird dies erkannt, so kann auf einen Angriff geschlossen werden und das Verteidigungsprofil kann aktiviert werden. So ist es als Reaktion möglich bezüglich einer diskutierten Versionsnummer eine Aktualisierung durchzuführen. Werden Systemparameter diskutiert, die bei einer älteren Versionsnummer besonders anfällig sind, so wird dies im Zielsystem erkannt und das Verteilungsprofil sieht ein Update vor.

Gemäß einem weiteren Aspekt der vorliegenden Erfindung umfasst das Identifizieren von Elementen ein Identifizieren einer Angriffsbeschreibung, einer Sicherheitslücke, eines Hinweises auf einen Angreifer, einer Uhrzeit, eines Datums, einer Dauer, einer Softwarekomponente, eines Steuerbefehls und/ oder einer Adresse. Dies hat den Vorteil, dass additiv zu dem bereitgestellten Systemprofil auch weitere Hinweise identifiziert werden können. So ist es möglich, dass ein Angreifer eine Sicherheitslücke benennt oder aber einen Angriff an sich beschreibt.

Darüber hinaus ist es für ein kollektives Eingreifen notwendig, dass ein Zeitpunkt festgelegt wird. Wird beispielsweise ein Server zu einer bestimmten Uhrzeit für eine bestimmte Dauer überlastet, so wird dies typischerweise ebenfalls in dem Kommunikationsverlauf spezifiziert. Dementsprechend kann bei dem Anwenden des Verteidigungsprofils diese Information verwendet werden und das Verteidigungsprofil kann genau auf den jeweiligen Angriff eingehen beziehungsweise auch eine Uhrzeit beziehungsweise eine Dauer festlegen, wie lange die Verteidigungsmaßnahmen stattfinden sollen.

Gemäß einem weiteren Aspekt der vorliegenden Erfindung umfasst das Identifizieren von Elementen ein statistisches Verfahren, eine Wortstammreduktion, ein Löschen von Stoppwörtern, eine linguistische Datenverarbeitung, eine Spracherkennung, eine syntaktische Analyse, eine semantische Analyse, ein Betreiben eines neuronalen Netzwerks und/ oder eine Textverarbeitung. Dies hat den Vorteil, dass eine Sprachanalyse durchgeführt werden kann, was sich nicht nur auf textuelle Beschreibungen bezieht, sondern vielmehr kann auch eine gesprochene Sprache analysiert werden. Der Fachmann kennt entsprechende Techniken, wie er Sprache in Text umwandeln kann. Darüber hinaus ist es möglich, dass mittels statistischer Verfahren ein zeitlicher Verlauf der Elemente des Kommunikationsverlaufs erfolgt. So kann beispielsweise identifiziert werden, dass ein bestimmter Angriff auf ein bestimmtes Ziel mit steigender Häufigkeit diskutiert wird. Somit wird erkannt, dass dieser Angriff kurz bevorsteht. Auch liegen Daten von vergangenen Angriffen vor und es kann somit auch ein neuronales Netzwerk beziehungsweise eine künstliche Intelligenz trainiert werden. Es werden vergangene Kommunikationsverläufe ausgewertet und die entsprechenden Angriffe werden entsprechend eingeordnet. Erkennt man diese Zusammenhänge in den Trainingsdaten wieder, so kann man ein entsprechendes Muster auch auf die Zukunft anwenden und proaktiv das Verteidigungsprofil anwenden.

Gemäß einem weiteren Aspekt der vorliegenden Erfindung weist das Verteidigungsprofil jedem Element des Systemprofils eine Verteidigungsregel zu. Dies hat den Vorteil, dass Systemkomponenten beziehungsweise Systemparameter entsprechend geschützt werden und bereits vor einem Angriff klar ist, welche Maßnahme zu ergreifen ist. Eine Verteidigungsregel kann beispielsweise besagen, dass wenn der Systemparameter Anzahl der Anfragen diskutiert, wird vorab eine bestimmte Höchstgrenze von Benutzern festgelegt oder aber auch ein Port gesperrt.

Gemäß einem weiteren Aspekt der vorliegenden Erfindung umfasst das Verteidigungsprofil ein Sperren von Ports, ein Sperren eines Benutzers, ein Sperren einer Adresse, ein Einstellen eines vorbestimmten Parameterwerts, ein Deaktivieren und/ oder ein Ausführen von Steuerbefehlen. Dies hat den Vorteil, dass auf die Großzahl aller Angriffe Verteidigungsregeln definiert werden können und somit wird proaktiv bereits vor einem Angriff eine entsprechende Sicherheitsmaßnahme implementiert, sodass der Angriff nicht in der angedachten Form durchgeführt werden kann.

Gemäß einem weiteren Aspekt der vorliegenden Erfindung werden identifizierte Angriffe mitprotokolliert und die betroffenen Systemkomponenten, Systemparameter und/ oder Adressen in dem Systemprofil abgespeichert. Dies hat den Vorteil, dass zu jedem Zeitpunkt klar ist, welche Elemente in dem Kommunikationsverlauf zu identifizieren sind. So können Trainingsdaten geschaffen werden, welche sodann bezüglich vorhandener Muster analysiert werden können. Werden entsprechende Muster bei zukünftigen Kommunikationsverläufen erkannt, so kann bereits festgestellt werden, welcher Angriff wann erfolgt und entsprechende Sicherheitsmaßnahmen können getroffen werden.

Gemäß einem weiteren Aspekt der vorliegenden Erfindung erfolgt das Anwenden des Verteidigungsprofils, falls vorbestimmte Elemente mit einer bestimmten Häufigkeit identifiziert werden. Dies hat den Vorteil, dass bei einer absoluten oder relativen Häufigkeit des Auftretens bestimmter Elemente das Verteidigungsprofil angewendet werden kann. Somit ist es also möglich festzulegen, dass bei einem Überschreiten eines absoluten oder relativen Schwellwerts der Häufigkeit eine bestimmte Sicherheitsmaßnahme ergriffen wird. Wird ein bestimmter Angriff mit großer Häufigkeit zitiert, so ist davon auszugehen, dass dieser Angriff kurz bevorsteht.

Gemäß einem weiteren Aspekt der vorliegenden Erfindung beschreibt das Verteilungsprofil für jeden Angriff eine Reaktion, eine Startzeit und/ oder eine Endzeit. Dies hat den Vorteil, dass das Verteilungsprofil klar beschreibt, wann dies angewendet werden soll und somit wird ermöglicht, dass Systembeschränkungen möglichst kurz aufrechterhalten werden müssen. So wird nicht nur eine Startzeit des Anwendens des Verteidigungsprofils definiert, sondern eben auch eine Endzeit, welche beschreibt, wann der normale Zustand wieder eintreten soll.

Gemäß einem weiteren Aspekt der vorliegenden Erfindung erfolgt das kontinuierliche Auslesen zu einer vorbestimmten Startzeit und/ oder periodisch. Dies hat den Vorteil, dass in regelmäßigen Abständen ein Auslesen stattfinden kann. So beschreibt das kontinuierliche Auslesen den Sachverhalt, dass regelmäßig die Kommunikationsverläufe ausgelesen werden.

Gemäß einem weiteren Aspekt der vorliegenden Erfindung erfolgt für jede Datenquelle eines Kommunikationsverlaufs eine spezialisierte Sprachverarbeitung. Dies hat den Vorteil, dass auf die unterschiedlichen Kommunikationskanäle eingegangen werden kann und somit können beispielsweise auch Sprachnachrichten entschlüsselt werden.

Gemäß einem weiteren Aspekt der vorliegenden Erfindung wird für jede Datenquelle eines Kommunikationsverlaufs eine spezialisierte Schnittstelle zum Auslesen bereitgestellt. Dies hat den Vorteil, dass die unterschiedlichen Kommunikationskanäle entsprechend zugegriffen werden können. Beispielsweise kann bei einem ersten Kommunikationskanal eine Registrierung notwendig sein, was über die entsprechende Schnittstelle erfolgt. Ein anderer Kommunikationskanal kann ein bestimmtes Datenformat vorsehen, welches dann mit der entsprechenden Schnittstelle ausgelesen werden kann.

Die Aufgabe wird auch gelöst durch eine Systemanordnung zum proaktiven Einstellen einer Sicherheitskonfiguration bei Systemkomponenten, aufweisend eine Überwachungseinheit eingerichtet zum kontinuierlichen Auslesen mindestens eines Kommunikationsverlaufs aus einem verteilten Computernetzwerk; eine Beschreibungseinheit eingerichtet zum Bereitstellen eines Systemprofils als textuelle Beschreibung von Systemkomponenten, Systemparametern und mindestens einer Adresse; eine Analyseeinheit eingerichtet zum Identifizieren von Elementen des bereitgestellten Systemprofils in dem Kommunikationsverlauf; und eine Sicherheitseinheit eingerichtet zum Anwenden eines Verteidigungsprofils auf diejenige Systemkomponente deren Adresse und mindestens ein weiteres Element des Systemprofils in dem Kommunikationsverlauf identifiziert werden.

Die Aufgabe wird auch gelöst durch ein Computerprogrammprodukt mit Steuerbefehlen, welche das vorgeschlagene Verfahren implementieren beziehungsweise die vorgeschlagene Vorrichtung betreiben.

Erfindungsgemäß ist es besonders vorteilhaft, dass das Verfahren zum Betreiben der vorgeschlagenen Vorrichtungen und Einheiten verwendet werden kann. Ferner eignen sich die vorgeschlagenen Vorrichtungen und Einrichtungen zur Ausführung des erfindungsgemäßen Verfahrens. Somit implementiert jeweils die Vorrichtung strukturelle Merkmale, welche geeignet sind, das entsprechende Verfahren auszuführen. Die strukturellen Merkmale können jedoch auch als Verfahrensschritte ausgestaltet werden. Auch hält das vorgeschlagene Verfahren Schritte zu Umsetzung der Funktion der strukturellen Merkmale bereit. Darüber hinaus können physische Komponenten gleicherweise auch virtuell beziehungsweise virtualisiert bereitgestellt werden.

Weitere Vorteile, Merkmale und Einzelheiten der Erfindung ergeben sich aus der nachfolgenden Beschreibung, in der unter Bezugnahme auf die Zeichnungen Aspekte der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Ebenso können die vorstehend genannten und die hier weiter ausgeführten Merkmale je für sich oder zu mehreren in beliebigen Kombinationen Verwendung finden. Funktionsähnliche oder identische Bauteile oder Komponenten sind teilweise mit gleichen Bezugszeichen versehen. Die in der Beschreibung der Ausführungsbeispiele verwendeten Begriffe "links", "rechts", "oben" und "unten" beziehen sich auf die Zeichnungen in einer Ausrichtung mit normal lesbarer Figurenbezeichnung beziehungsweise normal lesbaren Bezugszeichen. Die gezeigten und beschriebenen Ausführungsformen sind nicht als abschließend zu verstehen, sondern haben beispielhaften Charakter zur Erläuterung der Erfindung. Die detaillierte Beschreibung dient der Information des Fachmanns, daher werden bei der Beschreibung bekannte Schaltungen, Strukturen und Verfahren nicht im Detail gezeigt oder erläutert, um das Verständnis der vorliegenden Beschreibung nicht zu erschweren. In den Figuren zeigen:
- Figur 1:: ein schematisches Ablaufdiagramm des vorgeschlagenen Verfahrens gemäß einem Aspekt der vorliegenden Erfindung;
- Figur 2:: ein schematisches Blockschaltbild der vorgeschlagenen Systemanordnung gemäß einem Aspekt der vorliegenden Erfindung; und
- Figur 3:: ein schematisches Blockschaltbild einer weiteren Systemarchitektur gemäß einem Aspekt der vorliegenden Erfindung.

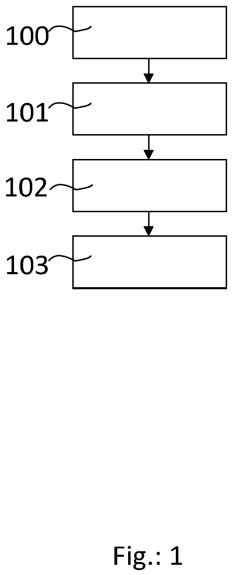

Figur 1 zeigt ein schematisches computerimplementiertes Verfahren zum proaktiven Einstellen einer Sicherheitskonfiguration bei Systemkomponenten, aufweisend ein kontinuierliches Auslesen 100 mindestens eines Kommunikationsverlaufs aus einem verteilten Computernetzwerk; ein Bereitstellen 101 eines Systemprofils als textuelle Beschreibung von Systemkomponenten, Systemparametern und mindestens einer Adresse; ein Identifizieren 102 von Elementen des bereitgestellten 101 Systemprofils in dem Kommunikationsverlauf; und ein Anwenden 103 eines Verteidigungsprofils auf diejenige Systemkomponente deren Adresse und mindestens ein weiteres Element des Systemprofils in dem Kommunikationsverlauf identifiziert werden.

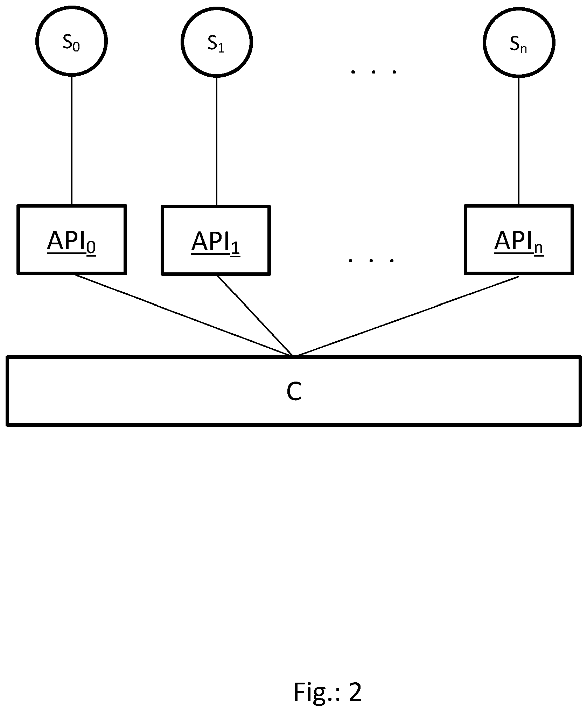

Figur 2 zeigt in einem schematischen Blockschaltdiagramm mehrere Datenquellen S0, S1, ..., SN, welche jeweils von einer eigenen, spezialisierten Schnittstelle API ausgelesen werden. Die Daten werden also von den unterschiedlichen Kommunikationskanälen abgegriffen, wozu ein sogenannter Crawler verwendet wird. Die Datenquellen in ihrer Gesamtheit oder jeweils einzelnen Stellen einen Kommunikationsverlauf dar. So ist es möglich, dass die erste Datenquelle ein Forum ist und die zweite Datenquelle ein Nachrichtendienst. So können Forenbeiträge einen eigenen Kommunikationsverlauf bilden oder aber auch eine Verkettung von Kurznachrichten kann einen Kommunikationsverlauf beschreiben. Auch können beide Kommunikationskanäle in ihrer Gesamtheit einen einzigen Kommunikationsverlauf beschreiben. So können also unterschiedliche Plattformen zusammengeführt werden.

Durch die unterschiedlichen Schnittstellen ist es möglich, dass man unterschiedliche Datenquellen erschließt. So stellen Foren ein anderes Datenformat bereit wie beispielsweise Kurznachrichtendienste. Mittels der unterschiedlichen Schnittstellen können also spezialisiert alle Datenquellen ausgelesen werden und sodann verwertet werden. Somit können Angriffe innerhalb unterschiedlicher Kommunikationsverläufe identifiziert werden und sodann können Sicherheitsmaßnahmen aktiviert werden.

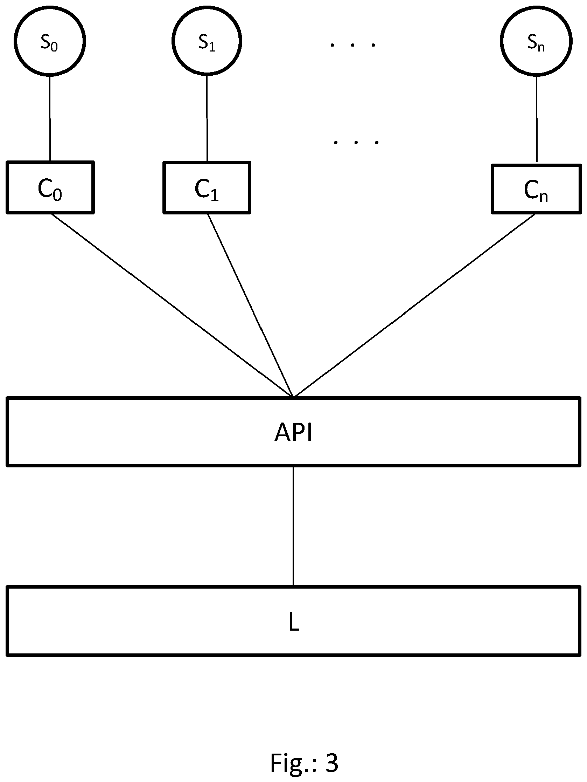

Figur 3 zeigt ein analoges Blockschaltbild, wobei nunmehr eine einzelne Schnittstelle API vorgesehen ist und mehrere spezialisierte Crawler C0, C1, ..., CN. Diese greifen die Daten aus den unterschiedlichen Datenquellen ab und liefern diese an eine einheitliche Schnittstelle API. Darunter wird eine Logik L implementiert.

## Patentansprüche

1. Computerimplementiertes Verfahren zum proaktiven Einstellen einer Sicherheitskonfiguration bei Systemkomponenten, aufweisend:
- ein kontinuierliches Auslesen (100) mindestens eines Kommunikationsverlaufs aus einem verteilten Computernetzwerk;
- ein Bereitstellen (101) eines Systemprofils als textuelle Beschreibung von Systemkomponenten, Systemparametern und mindestens einer Adresse;
- ein Identifizieren (102) von Elementen des bereitgestellten (101) Systemprofils in dem Kommunikationsverlauf; und
- ein Anwenden (103) eines Verteidigungsprofils auf diejenige Systemkomponente deren Adresse und mindestens ein weiteres Element des Systemprofils in dem Kommunikationsverlauf identifiziert werden.

2. Verfahren nach Anspruch 1, **dadurch gekennzeichnet, dass** das Systemprofil mindestens eine physische Komponente, eine Produktbezeichnung, eine Komponentenart, eine Seriennummer, eine Versionsnummer, eine Konfiguration, einen alphanummerischen Wert, eine Internetadresse, eine Internetprotokolladresse, Steuerbefehle, eine Unternehmensbezeichnung, einen Standort und/ oder einen Hinweis auf eine Schnittstelle eines Systems aufweist.

3. Verfahren nach Anspruch 1 oder 2, **dadurch gekennzeichnet, dass** das Identifizieren (102) von Elementen ein Identifizieren einer Angriffsbeschreibung, einer Sicherheitslücke, eines Hinweises auf einen Angreifer, einer Uhrzeit, eines Datums, einer Dauer, einer Softwarekomponente, mindestens eines Steuerbefehls und/ oder einer Adresse umfasst.

4. Verfahren nach einem der vorhergehenden Ansprüche, **dadurch gekennzeichnet, dass** das Identifizieren (102) von Elementen ein statistisches Verfahren, eine Wortstammreduktion, ein Löschen von Stoppwörtern, eine linguistische Datenverarbeitung, eine Spracherkennung, eine syntaktische Analyse, eine semantische Analyse, ein Betreiben eines neuronalen Netzwerks und/ oder eine Textverarbeitung umfasst.

5. Verfahren nach einem der vorhergehenden Ansprüche, **dadurch gekennzeichnet, dass** das Verteidigungsprofil jedem Element des Systemprofils eine Verteidigungsregel zuweist.

6. Verfahren nach einem der vorhergehenden Ansprüche, **dadurch gekennzeichnet, dass** das Verteidigungsprofil ein Sperren von Ports, ein Sperren eines Benutzers, ein Sperren einer Adresse, ein Einstellen eines vorbestimmten Parameterwerts, ein Deaktivieren und/ oder ein Ausführen von Steuerbefehlen umfasst.

7. Verfahren nach einem der vorhergehenden Ansprüche, **dadurch gekennzeichnet, dass** identifizierte Angriffe mitprotokolliert werden und die betroffenen Systemkomponenten, Systemparameter und/ oder Adressen in dem Systemprofil abgespeichert werden.

8. Verfahren nach einem der vorhergehenden Ansprüche, **dadurch gekennzeichnet, dass** das Anwenden (103) des Verteidigungsprofils erfolgt, falls vorbestimmte Elemente mit einer bestimmten Häufigkeit identifiziert werden.

9. Verfahren nach einem der vorhergehenden Ansprüche, **dadurch gekennzeichnet, dass** das Verteidigungsprofil für jeden Angriff eine Reaktion, eine Startzeit und/ oder eine Endzeit beschreibt.

10. Verfahren nach einem der vorhergehenden Ansprüche, **dadurch gekennzeichnet, dass** das kontinuierliche Auslesen (100) zu einer vorbestimmten Startzeit erfolgt und/ oder periodisch ausgelöst wird.

11. Verfahren nach einem der vorhergehenden Ansprüche, **dadurch gekennzeichnet, dass** für jede Datenquelle eines Kommunikationsverlaufs ein spezialisierte Sprachverarbeitung und/ oder Textverarbeitung erfolgt.

12. Verfahren nach einem der vorhergehenden Ansprüche, **dadurch gekennzeichnet, dass** für jede Datenquelle eines Kommunikationsverlauf eine spezialisierte Schnittstelle zum Auslesen bereitgestellt wird.

13. Systemanordnung zum proaktiven Einstellen einer Sicherheitskonfiguration bei Systemkomponenten, aufweisend:
- eine Überwachungseinheit eingerichtet zum kontinuierlichen Auslesen (100) mindestens eines Kommunikationsverlaufs aus einem verteilten Computernetzwerk;
- eine Beschreibungseinheit eingerichtet zum Bereitstellen (101) eines Systemprofils als textuelle Beschreibung von Systemkomponenten, Systemparametern und mindestens einer Adresse;
- eine Analyseeinheit eingerichtet zum Identifizieren (102) von Elementen des bereitgestellten (101) Systemprofils in dem Kommunikationsverlauf; und
- eine Sicherheitseinheit eingerichtet zum Anwenden (103) eines Verteidigungsprofils auf diejenige Systemkomponente deren Adresse und mindestens ein weiteres Element des Systemprofils in dem Kommunikationsverlauf identifiziert werden.

14. Computerprogrammprodukt, umfassend Befehle, die bei der Ausführung des Programms durch mindestens einen Computer diesen veranlassen, die Schritte des Verfahrens nach einem der Ansprüche 1 bis 12 auszuführen.

15. Computerlesbares Speichermedium, umfassend Befehle, die bei der Ausführung durch mindestens einen Computer diesen veranlassen, die Schritte des Verfahrens nach einem der Ansprüche 1 bis 12 auszuführen.
